# EUROPEAN PATENT SPECIFICATION

(11) **EP 1 706 814 B1**
(45) Date of publication and mention of the grant of the patent: **22.02.2017**
(21) Application number: 04800042.6
(22) Date of filing: 05.11.2004
(51) Int. Cl.: G06F 3/14, G09G 5/00

(54) **DISPLAY SYSTEM**
ANZEIGESYSTEM
SYSTEME D'AFFICHAGE

(30) Priority: 19.01.2004 KR 2004003938
(43) Date of publication of application: 04.10.2006
(73) Proprietor: Samsung Electronics Co., Ltd., Suwon-si, Gyeonggi-do, 443-742 (KR)
(72) Inventor: KIM, Young-Chan, Euiwang-si, Gyeonggi-do 437-080 (KR); LEE, Dong-Hoon, Songpa-gu, Seoul 138-240 (KR)
(74) Representative: D'Halleweyn, Nele Veerle Trees Gertrudis
(86) International application number: PCT/KR2004/002854
(87) International publication number: WO 2005/069120

(56) References cited:
- EP-A- 1 661 118
- JP-A- 11 015 425
- JP-A- 2001 175 398
- US-A- 6 078 361
- US-A1- 2003 001 829
- US-B1- 6 552 738
- "ACCESS.bus Specifications Version 3.0" 30 September 1995 (1995-09-30), ACCESS.BUS INDUSTRY GROUP , SUNNYVALE, CA , XP002488014 * chapters 7.1, 7.2, 7.3.5, 7.3.5.4, 7.5 - 7.5.3 * * appendix 7A *

## Description

### Field of the Invention

The present general inventive concept relates to a display system, and more particularly, to a display system to provide user-friendly graphical interfaces and information of controllable functions of a microcomputer used with a controller which outputs control instructions to control a display, and to a method of controlling a display.

### BACKGROUND ART

WO 2005/022505 in the name of the Applicant discloses a display device receiving image signals from an external device and displaying images, having a data storage storing a display device type identifying data including information about the type of the display device, the display device including a setup control part provided in the external device offering a plurality of user interfaces to set the display condition of the images corresponding to a plurality of display device types; and a microcomputer transferring the display device type identifying data read from the data storage to the setup control part and controlling the display condition of the images, wherein the setup control part identifies the type of display device based on the display identifying data received from the microcomputer and provides a user interface corresponding to the identified type of the display device among the plurality of user interfaces.

US 2003/0001829 discloses a method of remotely adjusting a display device connected to a host computer.

A display, particularly a monitor, is an apparatus which receives horizontal and vertical synchronization signals (H/V Sync Signals) and image signals like R (Red), G (Green), B (Blue) signals from a computer graphic controller, and displays images.

Generally, a display for a monitor is a CDT (Color Display Tube) and a LCD (Liquid Crystal Display). A CDT, as a CRT (Cathode Ray Tube) for a monitor, a type of electronic tube, collects electrons emitted from a cathode sealed within the tube, accelerates the electrons to make electronic beams and controls the direction of the electrons by the action of the electronic field or the magnetic field. On the other hand, an LCD is a display which transforms molecular structures of liquid crystals by a voltage difference of two electrodes on two substrates inserted in the liquid crystals thereof, generates a brightness, and displays images.

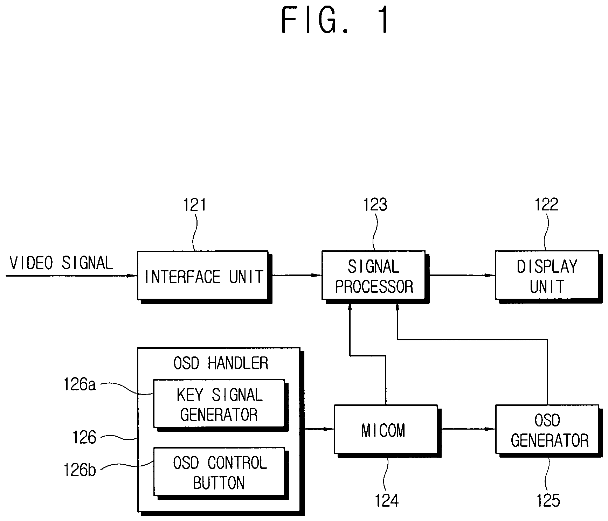

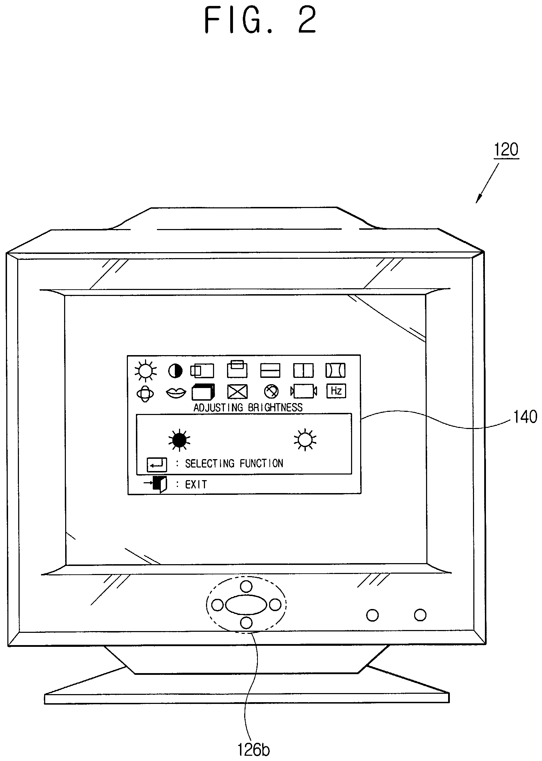

A conventional display 120, as shown in FIGS. 1 and 2, comprises an interface unit 121 to receive image signals, a display unit 122 to show images, a signal processor 123 to convert the image signals inputted through the interface unit 121 to a signal being displayed by the display unit 122, an OSD (On Screen Display) generator 125 to generate OSD signals, an OSD handler 126 to generate key signals and a microcomputer (MICOM) 124 to control the interface unit 121, the display unit 122, the signal processor 123, the OSD generator 125 and the OSD handler 126. Here, the OSD handler 126 comprises an OSD control button 126b provided in the front of a display device 140, and a key signal generator 126a of the OSD control button 126b. Accordingly, when a user handles the OSD control button 126b, the key signal generator 126a transmits the key signals corresponding to the key handling to the microcomputer 124, and the microcomputer 124 controls the OSD generator 125 according to the key signals transmitted from key signal generator 126a to show an OSD display on the display unit 122. Accordingly, an image display state, such as a brightness, a contrast, a size, or the like is adjusted.

However, the conventional display 120 has some problems in adjusting the image display state.

First, to adjust an image display state, the display 120 needs another component such as the OSD generator 125, the OSD handler 126, or the like.

Second, the display 120 comprises a data storage such as an EEPROM in which data for the composition of the OSD picture and programs are stored. However, this data storage provided in the display 120 has limitations in the size of data for the composition of the OSD picture and programs because of a storage capacity. This makes the composition of the OSD picture simple, and the simple OSD picture cannot provide enough information related to the adjustment of an image display stage for users. Thus, the conventional display 120 should provide a manual about the method of an OSD handling and the adjustment of an image display stage using the OSD. Further, users should refer to the manual for the adjustment of a display stage of the display 120.

Third, the OSD control button 126b is provided in the front of the display 120, so that the number of OSD control buttons that can be provided is limited because of a space problem. When users adjust the display state of the display 120, they should make several key handlings, which results in an inconvenience to the users.

Accordingly, to solve the problems described above, if a computer having a larger storage capacity than a display is provided, resulting in increased convenience to the user's handling of the computer, which increases the user's control of an image display state, a user-friendly graphical interface of an image display adjustment can be provided.

### DISCLOSURE OF INVENTION

Accordingly, it is an object of the general inventive concept to provide a display system that provides a user-friendly graphical interface for users.

It is another object of the general inventive concept to provide a display system that provides information of controllable functions of a display for a controller like computers, or the like.

Additional aspects and advantages of the general inventive concept will be set forth in part in the description which follows and, in part, will be obvious from the description, or may be learned by practice of the invention.

The foregoing and/or other aspects of the general inventive concept can be achieved by providing a display system according to claim 1.

The invention also relates to a method of controlling a display system which is distinguished by the features of claim 9 .

According to an aspect of the general inventive concept, the interface unit may support a display data channel-command interface (DDC-CI).

According to another aspect of the invention, the display controller may provide the graphical user interface being set up with the controllable functions able to be controlled by the microcomputer for the display, based on the display information.

According to yet another aspect of the general inventive concept, the display information may include information on a display type, and the display type may include one of an LCD, a CRT and a DLP.

According to yet another aspect of the general inventive concept, the analog interface may include a D- SUB interface, and the digital interface may include a DVI interface.

According to still another aspect of the general inventive concept, the display information may include information of an microcomputer changeable service menu.

According to still another aspect of the general inventive concept, the display controller can request the display to transmit the display information when the display is connected to the interface unit, and the microcomputer can transmit the display information to the controller according to the request of the display controller.

### BRIEF DESCRIPTION OF THE DRAWINGS

These and/or other aspects and advantages of the general inventive concept will become apparent and more readily appreciated from the following description of the preferred embodiments, taken in conjunction with the accompanying drawings of which:
FIG. 1 is a control block diagram of a conventional display;
FIG. 2 is a front view of the conventional display of FIG. 1 showing a conventional OSD picture;
FIG. 3 is a control block diagram of a display system according to an embodiment of the present general inventive concept;
FIG. 4 is a control block diagram of a signal processor of FIG. 3;
FIG. 5 is a control flow chart of the display system according to another embodiment of the present general inventive concept.

### MODES FOR CARRYING OUT THE INVENTION

Reference will now be made in detail to the present embodiments of the general inventive concept, examples of which are illustrated in the accompanying drawings, wherein like reference numerals refer to the like elements throughout. The embodiments are described below in order to explain the general inventive concept by referring to the figures.

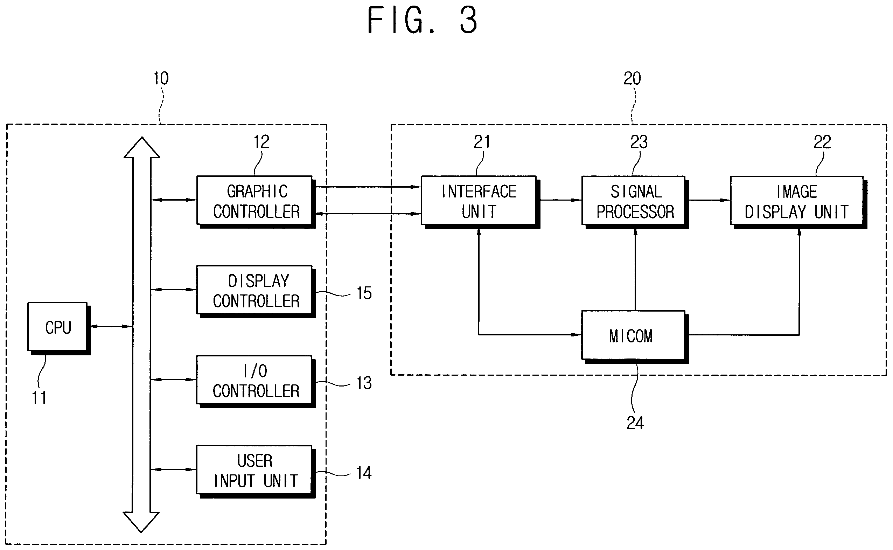

As shown in FIG. 3, a display system according to an embodiment of the general inventive concept includes a controller 10, and a display 20 to receive control instructions from the controller 10 and to execute functions of the display 20. Here, the controller 10 according to an embodiment of the general inventive concept can apply an image signal to the display 20 as illustrated, as an example. However, the general inventive concept is not limited thereto, for example, the controller 10 may include other apparatuses connected to the display 20 through a bi-directional communicable interface without regard to its present state.

The controller 10, such as a computer, according to this embodiment of the general inventive concept, includes a CPU (Central Processing Unit) 11, a graphic controller 12 that can output the image signal to the display 20, a user input unit 14, such as a keyboard, a mouse or the like, an I/O (Input/Output) controller 13 connected to the user input unit 14 that can process the user input signals inputted from the user input unit 14, a display controller 15 to output the control instructions to the display 20 and a system bus to connect each of the above listed items mutually.

The display controller 15 can provide a graphical user interface to set an image display stage. The display controller L5 according to this embodiment can be an application program installed in the controller 10 (or computer) and can act as an operating system of the controller 10, but is not limited thereto. Here, the display controller 15 can output control instructions according to a user's setting (s) through the graphical user interface.

Moreover, the display controller 15 according to this embodiment can receive display information from the display 20 and can provide the graphical user interface corresponding to the received display information. Here, the display controller 15 decides which functions can be controlled by an MICOM 24 of the display 20 based on the received display information and can provide the graphical user interface, which can be set up with only the control instructions that are able to be controlled by the MICOM 24. For example, when display controller 15 determines that the MICOM 24 of the display 20 doesn't support a resolution adjustment function based on the display information, the display controller 15 can cause the buttons for resolution adjustment, provided in the graphical user interface, to be disabled. Here, the display information from the display 20 will be set forth below.

The display controller 15 can transmit the control instructions corresponding to user's handling to the MICOM 24 through an interface unit 21 of the display 20 when the user handles the graphical user interface through the user input unit 14. In this case, the MICOM 24 can control a signal processor 23 and an image display unit 22 to change an image display state, based on the received control instructions, through the interface unit 21. Accordingly, the image display state can be adjusted through the user input unit 14, such as a mouse, etc., of the controller 10, so that a more convenient user interface can be provided.

Meanwhile, the display 20 according to this embodiment includes the interface unit 21, which can be connected with the graphic controller 12 of the controller 10 and can receive the image signals, the signal processor 23 to convert the image signal inputted through the interface unit 21 to a signal available to be displayed by the display unit 22, and the MICOM 24 to control each of these items within the display.

The interface unit 21 can receive the image signals from the graphic controller 12 of the controller 10. The image signals from the graphic controller 12 can include R (Red), G (Green), B (Blue) signals and horizontal and vertical synchronization signals (H/V Sync Signals). Here, the interface unit 21 can be one of various types of interface units that can be connected with the graphic controller 12 of the controller 10 (or computer), such as, for example, a D-SUB connector or a DVI connector.

Moreover, the interface unit 21 according to this embodiment can provide a bi-directional communication interface. Thus, the controller 10 may transmit data, as well as the image signals to the display 20. Further, the display 20 can transmit the various information of the display 20 to the controller 10. The interface unit 21 can support a display data channel (DDC) function to communicate bidirectionally with the controller 10. The DDC function of this embodiment may be a DDC-DI interface, but is not limited thereto. As stated above, the interface unit 21 may be one of several types of interface units, such as a USB interface and the like. The DDC function is a type of standard provided by VESA (Video Electronics Standard Association) for auto setup, i. e., Plug and Play in a display system, and defines signal lines and their sequences in exchanging data between the controller 10 and the display 20. Hereinafter, the interface unit 21 will be understood as being able to support the DDC functions as an example, and accordingly, the MICOM 24 of the display 20 can exchange data with the controller 10 through a DDC communication line.

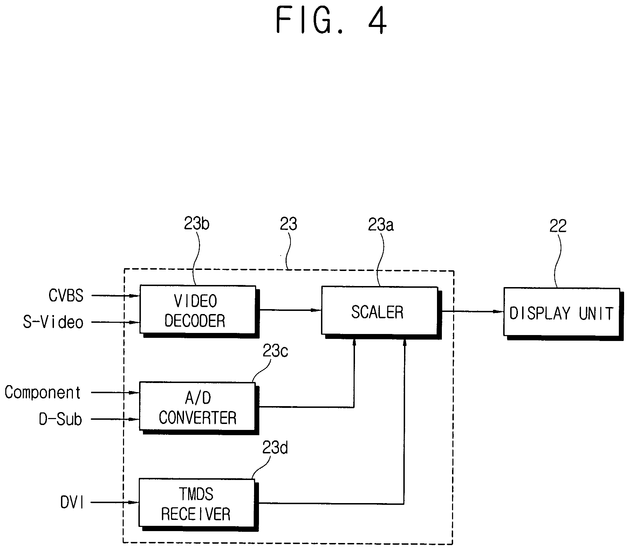

The image display unit 22 of the display 20 and the signal processor 23 according to this embodiment may be provided in various forms in accordance with the type of the display 20. For example, if the display 20 according to this embodiment is an LCD, the signal processor 23 may include an A/D converter 23c (see FIG. 4) to convert horizontal/ vertical synchronization signals, and R, G, and B images inputted through the interface unit 21 to digital image signals, and a scaler 23a (see FIG. 4) to scale the digital image signals from the A/D converter 23c (see FIG. 4). If the display 20 according to this embodiment is an LCD display, the display 20 may include an LCD panel to show images, a panel driver to drive the LCD panel and a back light unit to provide lights for the LCD panel. On the other hand, if the display 20 is a CRT, the signal processor 23 may include an amplifier to amplify the image signals inputted through the interface unit 21, a vertical deflector and a horizontal deflector to deflect electronic beams, based on a horizontal and vertical synchronization communication line. For example, when the MICOM 24 controls the image display unit 22 and/or the signal processor 23 to adjust an image display state shown on the image display unit 22, the MICOM 24 can inform the controller 10 regarding the information of controllable functions, for example, brightness, contrast, position, size and the like.

As the controllable functions by the MICOM 24 may be different in accordance with the type of the display 20 being used, it is an aspect that the display information includes information of the type of the display 20. The type of the display 20 being used may be one of a DLP (digital light processing), the LCD, a PDP (plasma display panel) and the CRT (cathode ray tube). Accordingly, the display controller 15 can determine the MICOM controllable functions based on the information of the type of the display 20 included in the display information. For example, if the type of the display 20 being used is the CRT, a button to adjust resolution may be disabled on the graphical user interface since resolution adjusting is not supported by a CRT. On the other hand, if the type of the display 20 being used is the LCD, since functions such as a Trapezoid, Parallelogram, Pin cushion, Pin balance, Rotation, Degausing and Moire, and the like, are supported only by the CRT, the display controller 15 will disable the buttons for these functions.

The display information may include the type of the graphical interface of the interface unit 21. Generally, as digital image signals inputted through the digital interface have exact color value and position value, the MICOM 24 doesn't adjust the color or the position of the image. Also, the MICOM 24 of the specific display 20 doesn't adjust Contrast, Fine and Coarse for digital image signals and doesn't execute an Auto Adjustment function. Here, the MICOM 24 can sense whether the controller 10 is connected with an analog interface such as a D-SUB interface, or a digital interface such as a DVI interface, as the interface unit 21, and can provide the display information including information for the controller 10 through the pertinent interface unit 21. Here, it is an aspect of the general inventive concept that the MICOM 24 defines the information of controllable functions over the analog interface and the digital interface, respectively, and outputs that information to the display controller 15.

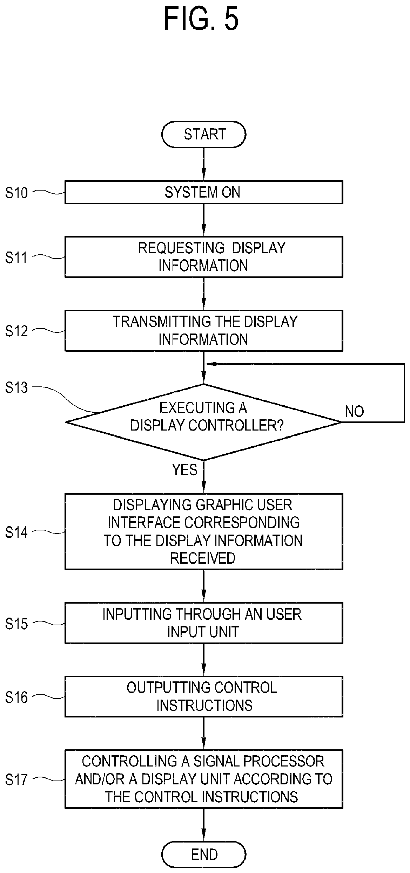

Referring to FIG. 5, a description of a control process of the display system according to the embodiment of FIG. 3 follows.

First, when a power is applied to the controller 10 and the display 20, being connected to each other, at operation S10, the display controller 15 of the controller 10 requests a transmission of the display information to the display 20 through the DDC communication line, at operation S11.

Next, at operation S12, when there is the request from the display controller 15, the MICOM 24 outputs the display information to the display controller 15 through the DDC communication line. Here, the display information can include the type of the display 20 and the type of the graphical user interface connected with the controller 10 requesting the display information.

Then, display controller 15 can check the MICOM 24 controllable functions based on the display information received from the display 20. When a user selects the execution of the display controller 15 at operation S13, the display controller 15 can output the image signals, to make the graphical user interface correspond with the display information displayed on the interface unit 21, to the display 20, at operation S14. In this case, the graphical user interface is displayed, and only the buttons for the MICOM controllable functions will be activated.

Here, when a user handles the user input unit 14, such as the mouse or the like, at operation S15, the display controller 15 can output a control instruction corresponding to the user's handling through the DDC communication line to the MICOM 24 at operation S16, and the MICOM 24 can control the display unit 22 and/or the signal processor 23 on the basis of the control instruction from display controller 15, at operation S17.

Meanwhile, the controller according to this embodiment may be a portable terminal, such as a portable computer having a service menu of display manufacturers, a PDA or the like. Here, the display controller 15 according to this embodiment can be provided in the portable terminal and can request the display information including a service menu available to be changed by the MICOM 24 when the portable terminal service menu is connected to the display 20. Here, the service menu refers to some functions that can be adjusted by a service man or the manufacturer, and may not be adjusted by a common consumer of the display 20. For example, the service menu may refer to adjusting the number of times panels are exchanged, a use time, Auto Color and Factory Reset and the like, for an LCD. Also, the MICOM 24 may provide the display information including information of the changeable service menu that can be changed by the MICOM 24 on the basis of the display information that is activated.

Further, although the type of the graphical user interface provided by the display controller 15 in FIG. 3 has not been described in detail, it may include much more information than the graphical user interface under the'conventional OSD settings described in FIG. 2, so that a user can receive the right information required to adjust the image display state through the graphical user interface without special manuals. Here, the graphical user interface is provided by the display controller 15 installed in the controller 10, such as a computer and the like, so that problems relating to the storage capacity and the handling problems under the conventional OSD setting can be overcome.

The display controller 15 can provide the graphical user interface on which only the buttons for the controllable functions by the MICOM 24, based on the display information, are activated in the above embodiment, but is not limited thereto. That is, various graphical user interfaces may be provided according to the type of the display 20, such as the LCD, the CRT and the like. In these cases, the buttons to adjust the Trapezoid, Parallelogram, Pin cushion, Pin balance, Rotation, Deguassing, Moire, and the like, are not provided for the LCD graphical user interface, and the button to adjust the resolution is not provided for the CRT graphical user interface.

As described above, the interface unit 21 to provide bi-directional communication, the image display unit 22, the signal processor 23, the display 20 having the MICOM 24 and the controller 10 connected to the interface unit 21are provided so that a graphical user interface that is user-friendly and can be set up with functions that can be controlled by the display 20 being used, can be provided.

As described above, the general inventive concept also provides a display system in which a graphical user interface that is user-friendly and can be set up with functions controllable by the MICOM of the display, can be provided.

Although a few embodiments of the general inventive concept have been shown and described, it would be appreciated by those skilled in the art that changes may be made in this embodiment without departing from the principles of the invention, the scope of which is defined in the claims.

## Claims

1. A display system comprising a controller and a display connected to the controller, wherein said display comprises:
an interface unit (21) adapted to receive an image signal from the controller and to perform bi-directional communication with the controller,
an image display unit (22) adapted to show an image,
a signal processor (23) adapted to convert an image signal inputted through the interface unit to a signal being displayed by the display unit, and
a microcomputer (24) adapted to output display information of controllable functions of the image display unit and the signal processor through the interface unit to the controller, said display information further comprising information on the type of the interface unit to which the controller is connected;
wherein said controller (10) is connected to the interface unit, is adapted to provide a graphical user interface corresponding to the display information received from the display, is adapted to cause the graphical user interface to be set up with the controllable functions that can be controlled by the microcomputer (24) for the display, based on the display information, and comprises a display controller (15) adapted to output control instructions to the microcomputer (24) through the interface unit, wherein the control instructions are adapted for controlling by the microcomputer (24) of at least one of the image display unit and the signal processor according to a setting through the graphical user interface,
wherein the type of the interface unit is one of an interface unit for receiving an analogue image signal and an interface unit for receiving a digital image signal.

2. The display system according to claim 2, wherein the interface unit comprises a DDC-CI interface.

3. The display system according to any of the claims 1-2, wherein the display information comprises information on a display type, and the display type comprises one of an LCD, a CRT and a DLP display.

4. The display system according to claim 1, wherein the interface unit is an analog interface unit comprising a D-SUB connector.

5. The display system according to claim 1, wherein the interface unit is a digital interface unit comprising a DVI connector.

6. The display system according to claim 1, wherein the display controller is adapted to request the display to transmit the display information when the display is connected to the controller through the interface unit, and the microcomputer (24) is adapted to transmit the display information to the controller according to the request of the display controller.

7. The display system according to claim 1, wherein the controller is a portable computer including a service menu of a display manufacturer including functions that can be adjusted such as the number of times panels are exchanged, a use time, Auto Color and Factory Reset, for an LCD.

8. The display apparatus according to claim 1, wherein the controller comprises a user input unit (14) to generate the control instructions to control the controllable functions of the display unit.

9. A method of controlling a display system comprising a controller and a display connected to the controller, wherein said display comprises:
an interface unit (21) adapted to receive an image signal from the controller and to perform bi-directional communication with the controller,
an image display unit (22) adapted to show an image,
a signal processor (23) adapted to convert an image signal inputted through the interface unit to a signal being displayed by the display unit, and
a microcomputer (24),
said method comprising:
requesting by the controller of display information from the display unit;
transmitting by the microcomputer (24) the display information to the controller through the interface unit (21), wherein said display information comprises information of controllable functions of the image display unit (22) and the signal processor (23) and said display information further comprises information on the type of the interface unit to which the controller is connected;
providing by the controller of a customized graphical user interface corresponding to the received display information, wherein the graphical user interface is set up with controllable functions that can be controlled by the microcomputer (24) for the display, based on the display information;
outputting by the controller of control instructions through the interface unit (21) for controlling at least one of the image display unit (22) and the signal processor (23) according to a setting through the graphical user interface;
wherein the type of the interface unit is one of an interface unit for receiving an analogue image signal and an interface unit for receiving a digital image signal.

10. The method according to claim 9, wherein the display information includes the type of display being used.

11. The method according to claim 9, wherein the graphical user interface displays only controllable functions related to the current display unit being used.

## Patentansprüche

1. Anzeigesystem, das eine Steuerung und eine mit der Steuerung verbundene Anzeige umfasst, wobei die Anzeige umfasst:
eine Schnittstelleneinheit (21), die dazu ausgelegt ist, ein Bildsignal von der Steuerung zu empfangen und eine bidirektionale Kommunikation mit der Steuerung durchzuführen,
eine Bildanzeigeeinheit (22), die dazu ausgelegt ist, ein Bild anzuzeigen,
eine Signalverarbeitungseinrichtung (23), die dazu ausgelegt ist, ein Bildsignal, das durch die Schnittstelleneinheit eingegeben wurde, in ein Signal, das von der Anzeigeeinheit angezeigt wird, umzuwandeln, und
einen Mikrocomputer (24), der dazu ausgelegt ist, Anzeigeinformationen von steuerbaren Funktionen der Bildanzeigeeinheit und der Signalverarbeitungseinrichtung durch die Schnittstelleneinheit an die Steuerung auszugeben, wobei die Anzeigeinformationen weiterhin Informationen über die Art von Schnittstelleneinheit, mit welcher die Steuerung verbunden ist, umfassen;
wobei die Steuerung (10) mit der Schnittstelleneinheit verbunden ist, dazu ausgelegt ist, eine grafische Benutzeroberfläche, die mit den empfangenen, von der Anzeige stammenden Anzeigeinformationen übereinstimmen, zur Verfügung zu stellen, dazu ausgelegt ist, die grafische Benutzeroberfläche zu veranlassen, mit den steuerbaren Funktionen, die durch den Mikrocomputer (24) für die Anzeige gesteuert werden können, eingerichtet zu werden, basierend auf den Anzeigeinformationen, und eine Anzeigensteuerung (15), die dazu ausgelegt ist, durch die Schnittstelleneinheit Steuerungsanweisungen an den Mikrocomputer (24) auszugeben, umfasst,
wobei die Steuerungsanweisungen für eine Steuerung durch den Mikrocomputer (24) der Bildanzeigeeinheit und/oder der Signalverarbeitungseinrichtung gemäß einem Einrichten durch die grafische Benutzeroberfläche ausgerichtet sind,
wobei es sich bei der Art von Schnittstelleneinheit um eine der folgenden handelt: eine Schnittstelleneinheit zum Empfang eines analogen Bildsignals oder eine Schnittstelleneinheit zum Empfang eines digitalen Bildsignals.

2. Anzeigesystem gemäß Anspruch 2, wobei die Schnittstelleneinheit eine DDC-CI-Schnittstelle umfasst.

3. Anzeigesystem gemäß einem der Ansprüche 1 bis 2, wobei die Anzeigeinformationen Informationen über eine Anzeigeart umfassen und die Anzeigeart eine der folgenden umfasst: eine LCD-, eine CRT- oder eine DLP-Anzeige.

4. Anzeigesystem gemäß Anspruch 1, wobei es sich bei der Schnittstelleneinheit um eine analoge Schnittstelle handelt, die einen D-SUB-Verbinder umfasst.

5. Anzeigesystem gemäß Anspruch 1, wobei es sich bei der Schnittstelleneinheit um eine digitale Schnittstelle handelt, die einen DVI-Verbinder umfasst.

6. Anzeigesystem gemäß Anspruch 1, wobei die Anzeigensteuerung dazu ausgelegt ist, bei der Anzeige die Übertragung von Anzeigeinformationen anzufordern, wenn die Anzeige durch die Schnittstelleneinheit mit der Steuerung verbunden ist, und der Mikrocomputer (24) dazu ausgelegt ist, die Anzeigeinformationen gemäß der Anforderung der Anzeigensteuerung an die Steuerung zu übertragen.

7. Anzeigesystem gemäß Anspruch 1, wobei es sich bei der Steuerung um einen tragbaren Computer handelt, der ein Dienstmenü des Anzeigenherstellers umfasst, welches Funktionen beinhaltet, die angepasst werden können, wie zum Beispiel die Häufigkeit, mit der Bildschirme ausgetauscht werden können, eine Benutzungszeit, Auto-Color und auf Werkseinstellungen zurücksetzen (Factory Reset) für eine LCD-Anzeige.

8. Anzeigesystem gemäß Anspruch 1, wobei die Steuerung eine Benutzereingabeeinheit (14) umfasst, um die Steuerungsanweisungen, mit denen die steuerbaren Funktionen der Anzeigeeinheit gesteuert werden, zu erzeugen.

9. Verfahren zur Steuerung eines Anzeigesystems, das eine Steuerung und eine mit der Steuerung verbundene Anzeige umfasst, wobei die Anzeige umfasst:
eine Schnittstelleneinheit (21), die dazu ausgelegt ist, ein Bildsignal von der Steuerung zu empfangen und eine bidirektionale Kommunikation mit der Steuerung durchzuführen,
eine Bildanzeigeeinheit (22), die dazu ausgelegt ist, ein Bild anzuzeigen,
eine Signalverarbeitungseinrichtung (23), die dazu ausgelegt ist, ein Bildsignal, das durch die Schnittstelleneinheit eingegeben wurde, in ein Signal, das von der Anzeigeeinheit angezeigt wird, umzuwandeln, und
einen Mikrocomputer (24),
wobei das Verfahren umfasst:
Anfordern, durch die Steuerung, von Anzeigeinformationen von der Anzeigeeinheit;
Übertragen, durch den Mikrocomputer (24), der Anzeigeinformationen durch die Schnittstelleneinheit (21) an die Steuerung, wobei die Anzeigeinformationen Informationen über steuerbare Funktionen der Bildanzeigeeinheit (22) und der Signalverarbeitungseinrichtung (23) umfassen, und die Anzeigeinformationen weiterhin Informationen über die Art von Schnittstelleneinheit, mit welcher die Steuerung verbunden ist, umfassen;
zur Verfügung stellen, durch die Steuerung, einer kundenspezifischen grafischen Benutzeroberfläche, die mit den empfangenen Anzeigeinformationen übereinstimmt, wobei die grafische Benutzeroberfläche mit steuerbaren Funktionen eingerichtet ist, die durch den Mikrocomputer (24) für die Anzeige gesteuert werden können, basierend auf den Anzeigeinformationen;
Ausgeben, durch die Steuerung, von Steuerungsanweisungen durch die Schnittstelleneinheit (21), um die Bildanzeigeeinheit (22) und/oder die Signalverarbeitungseinrichtung (23) gemäß einem Einrichten durch die grafische Benutzeroberfläche zu steuern,
wobei es sich bei der Art von Schnittstelleneinheit um eine der folgenden handelt: eine Schnittstelleneinheit zum Empfang eines analogen Bildsignals oder eine Schnittstelleneinheit zum Empfang eines digitalen Bildsignals.

10. Verfahren gemäß Anspruch 9, wobei die Anzeigeinformationen die Art der verwendeten Anzeige umfassen.

11. Verfahren gemäß Anspruch 9, wobei die grafische Benutzeroberfläche nur steuerbare Funktionen, die mit der aktuell verwendeten Anzeigeeinheit in Verbindung stehen, anzeigt.

## Revendications

1. Système d'affichage comprenant un organe de commande et un affichage relié à l'organe de commande, ledit affichage comprenant :
une unité d'interface (21) conçue pour recevoir un signal d'image en provenance de l'organe de commande et pour réaliser une communication bidirectionnelle avec l'organe de commande,
une unité d'affichage d'image (22) conçue pour diffuser une image,
un processeur de signaux (23) conçu pour transformer un signal d'image entré grâce à l'unité d'interface en un signal affiché par l'unité d'affichage, et
un micro-ordinateur (24) conçu pour émettre des informations d'affichage de fonctions commandables de l'unité d'affichage d'image et du processeur de signaux par l'intermédiaire de l'unité d'interface auprès de l'organe de commande, lesdites informations d'affichage comprenant en outre des informations portant sur le type d'unité d'interface à laquelle l'organe de commande est relié ;
dans lequel ledit organe de commande (10) est relié à l'unité d'interface, est conçu pour fournir une interface utilisateur graphique correspondant aux informations d'affichage reçues en provenance de l'affichage, est conçu pour amener l'interface utilisateur graphique à être paramétrée au vu des fonctions commandables qui peuvent être commandées par le micro-ordinateur (24) aux fins de l'affichage, en fonction des informations d'affichage, et comprend un organe de commande d'affichage (15) conçu pour émettre des instructions de commande auprès du micro-ordinateur (24) par le biais de l'unité d'interface, lesdites instructions de commande étant adaptées pour commander, par le biais du micro-ordinateur (24), l'unité d'affichage d'image et/ou le processeur de signaux conformément à un réglage par l'intermédiaire de l'interface utilisateur graphique,
le type d'unité d'interface est celui d'une unité d'interface permettant de recevoir un signal d'image analogique ou celui d'une unité d'interface permettant de recevoir un signal d'image numérique.

2. Système d'affichage selon la revendication 2, dans lequel l'unité d'interface comprend une interface DDC-CI.

3. Système d'affichage selon l'une quelconque des revendications 1 et 2, dans lequel les informations d'affichage comprennent des informations portant sur le type d'affichage, et le type d'affichage comprend un écran à cristaux liquides (LCD), un écran à tube cathodique ou un écran DLP.

4. Système d'affichage selon la revendication 1, dans lequel l'unité d'interface est une unité d'interface analogique comprenant un connecteur D-SUB.

5. Système d'affichage selon la revendication 1, dans lequel l'unité d'interface est une unité d'interface numérique comprenant un connecteur DVI.

6. Système d'affichage selon la revendication 1, dans lequel l'organe de commande d'affichage est conçu pour requérir que l'affichage transmette les informations d'affichage lorsque l'affichage est relié à l'organe de commande par le biais de l'unité d'interface, et le micro-ordinateur (24) est conçu pour transmettre les informations d'affichage auprès de l'organe de commande conformément à la requête de l'organe de commande d'affichage.

7. Système d'affichage selon la revendication 1, dans lequel l'organe de commande est un ordinateur portable comportant un menu de services du fabricant de l'affichage parmi lesquels des fonctions susceptibles d'être réglées, telles que le nombre de fois que les écrans peuvent être changés, la durée d'utilisation, fonctions « Auto Color » et « Factory Reset » pour un écran LCD.

8. Système d'affichage selon la revendication 1, dans lequel l'organe de commande comprend une unité d'entrée utilisateur (14) permettant de produire les instructions de commande visant à commander les fonctions commandables de l'unité d'affichage.

9. Procédé de commande d'un système d'affichage comprenant un organe de commande et un affichage relié à l'organe de commande, dans lequel ledit affichage comprend :
une unité d'interface (21) conçue pour recevoir un signal d'image en provenance de l'organe de commande et pour réaliser une communication bidirectionnelle avec l'organe de commande,
une unité d'affichage d'image (22) conçue pour diffuser une image,
un processeur de signaux (23) conçu pour transformer un signal d'image entré grâce à l'unité d'interface en un signal affiché par l'unité d'affichage, et
un micro-ordinateur (24) ;
ledit procédé comprenant :
la demande, par l'organe de commande, d'informations d'affichage en provenance de l'unité d'affichage,
la transmission, par le micro-ordinateur (24), des informations d'affichage auprès de l'organe de commande par le biais de l'unité d'interface (21), lesdites informations d'affichage comprenant des informations de fonctions commandables de l'unité d'affichage d'image (22) et du processeur de signaux (23), et lesdites informations d'affichage comprennent en outre des informations portant sur le type d'unité d'interface à laquelle l'organe de commande est relié,
la fourniture, par l'organe de commande, d'une interface utilisateur graphique personnalisée, correspondant aux informations d'affichage reçues, l'interface utilisateur graphique étant paramétrée au vu des fonctions commandables qui peuvent être commandées par le micro-ordinateur (24) aux fins de l'affichage, en fonction des informations d'affichage,
l'émission, par l'organe de commande, d'instructions de commande par le biais de l'unité d'interface (21) visant à commander l'unité d'affichage d'image (22) et/ou le processeur de signaux (23) conformément à un réglage par l'intermédiaire de l'interface utilisateur graphique,
le type d'unité d'interface étant celui d'une unité d'interface permettant de recevoir un signal d'image analogique ou celui d'une unité d'interface permettant de recevoir un signal d'image numérique.

10. Procédé selon la revendication 9, dans lequel les informations d'affichage comprennent le type d'affichage utilisé.

11. Procédé selon la revendication 9, dans lequel l'interface utilisateur graphique affiche uniquement les fonctions commandables en lien avec l'unité d'affichage en cours d'utilisation.
